# EUROPEAN PATENT SPECIFICATION

(11) **EP 2 596 703 B1**
(45) Date of publication and mention of the grant of the patent: **28.12.2016**
(21) Application number: 11809576.9
(22) Date of filing: 11.07.2011
(51) Int. Cl.: A23L 2/00, A23L 2/38, A23L 31/00

(54) **YEAST EXTRACT CONTAINING LACTIC ACID**
HEFEEXTRAKT MIT MILCHSÄURE
EXTRAIT DE LEVURE CONTENANT DE L'ACIDE LACTIQUE

(30) Priority: 12.04.2011 JP 2011088319; 22.07.2010 JP 2010164981
(43) Date of publication of application: 29.05.2013
(73) Proprietor: Kikkoman Corporation, Chiba 278-8601 (JP); RIKEN VITAMIN CO., LTD., Chiyoda-ku, Tokyo 101-8370 (JP)
(72) Inventor: HORIGUCHI, Masaya, Noda-shi, Chiba 278-8601 (JP); NAKAHARA, Takeharu, Noda-shi, Chiba 278-8601 (JP); AOYAMA, Kenji, Noda-shi, Chiba 278-8601 (JP); WATANABE, Takehiko, Souka-shi, Saitama 340-0002 (JP); KOBAYASHI, Yasuyuki, Souka-shi, Saitama 340-0002 (JP)
(74) Representative: Keirstead, Tanis Evelyne
(86) International application number: PCT/JP2011/065775
(87) International publication number: WO 2012/011402

(56) References cited:
- EP-A1- 0 191 513
- EP-A1- 0 354 610
- WO-A1-82/02323
- JP-A- 2006 238 743
- JP-A- 2007 104 977
- DE PALMA REVILLON J P ET AL: "Production of Yeast Extract from Whey using Kluyveromyces marxianus", BRAZILIAN ARCHIVES OF BIOLOGY AND TECHNOLOGY, INSTITUTO DE TECNOLOGIA DO PARANA, BR, vol. 46, no. 2, 1 January 2003 (2003-01-01), pages 121-127, XP002417193, ISSN: 1516-8913
- GAUDREAU H. ET AL.: 'Lactic Fermentation of Media Containing High Concentrations of Yeast Extracts' J. FOOD SCI. vol. 62, no. 5, 1997, pages 1072 - 1075, XP055069935
- KOTZAMANIDIS C. ET AL.: 'Optimization of lactic acid production from beet molasses by Lactobacillus delbrueckii NCIMB 8130' WORLD J. MICROBIOL. BIOTECHNOL. vol. 18, no. 5, 2002, pages 441 - 448, XP008071357
- MONDRAGON-PARADA MARIA ELENA ET AL.: 'Lactic Acid Bacteria Production From Whey' APPL BIOCHEM BIOTECHNOL PART A vol. 134, no. 3, 2006, pages 223 - 232, XP055069937
- GENTE STEPHANIE ET AL.: 'Levels of cystathionine y lyase production by Geotrichum candidum in synthetic media and correlation with the presence of sulphur flavours in cheese' INT. J. FOOD MICROBIOL. vol. 114, no. 2, 2007, pages 136 - 142, XP005892039
- KOTA NAGANUMA ET AL.: 'Nyusan Hakko o Riyo shita Tsukemono Seizo Gijutsu no Kaihatsu' REPORT OF THE YAMANASHI INDUSTRIAL TECHNOLOGY CENTER no. 22, 2008, pages 115 - 121, XP008168046
- TOSHIHIRO SUZUKI ET AL.: 'The development of the new natural seasoning' REPORTS OF THE SHIZUOKA INDUSTRIAL TECHNOLOGY CENTER vol. 31, 1986, pages 91 - 96, XP008167969

## Description

### Technical Field

The present invention relates to a yeast extract that has a masked or reduced yeast-specific yeasty flavor. The present invention also relates to a yeast extract that is excellent in the balance and continuity of tastes and offers a meat extract-like taste.

### Background Art

Recent trends toward health consciousness and natural or additive-free products as well as problems in the safety of food such as BSE have rapidly raised expectations for yeast extracts, which are natural seasonings. The yeast extracts contain various free amino acids, organic acids, tasty 5'-nucleotides, etc., and are receiving attention as natural seasonings that confer a kokumi or thick taste to foods. The yeast extracts, however, may generate yeast-specific unusual smells (yeasty flavors) which is sometimes problematic, depending on, for example, raw material yeasts and their culture methods and methods for producing the yeast extracts.

Although not all of causative substances of this yeasty flavor have been identified, various methods have been attempted to remove or minimize the yeasty flavor. There have been reported on, for example: a method comprising adsorbing a molecule responsible for an unusual smell by active carbon treatment to remove the yeasty flavor (Patent Literature 1); and a method comprising liberating lipid components from a yeast extract by enzymatic treatment to reduce its yeasty flavor (Patent Literature 2). Also, there have been reported on: a method for preparing a yeast extract that retains tastiness while having a few unusual smells, comprising performing autolysis under pressure and subjecting the autolysate to concentration using a reverse osmosis membrane and subsequent filtration sterilization to remove a particular low-molecular-weight fraction (Patent Literature 3); a method for producing a yeast extract, comprising treating yeast cells at high pressure, then treating the resulting cells with endoprotease, and subsequently allowing exoprotease to act thereon (Patent Literature 4); and a method for removing the unusual smell or bitterness of a yeast extract, comprising passing a yeast extract obtained by enzymatic treatment through a hydrophobic resin column (Non Patent Literature 1). As previous attempts to cope with methods for producing yeast extracts and various problems therein, there have also been reported on: a method comprising heating a yeast extract under acidic conditions to remove its yeasty flavor; a method comprising contacting a yeast extract with supercritical carbon dioxide for extraction to remove its yeasty flavor; and a method comprising adding and mixing cyclodextrin into a yeast extract to mask its yeasty flavor (Non Patent Literatures 2 and 3). The production of a yeast extract with a pH of 4 to 6.5 and comprising ethyl acetate or sodium chloride as a pH adjuster is described in Patent Literature 5.

### Citation List

### Patent Literature

Patent Literature 1: Japanese Patent Laid-Open No. 2000-316523
Patent Literature 2: Japanese Patent Laid-Open No. 07-285995
Patent Literature 3: Japanese Patent Laid-Open No. 2002-355008
Patent Literature 4: Japanese Patent Laid-Open No. 2003-325130
Patent Literature 5: WO82/02323

### Non Patent Literature

Non Patent Literature 1: Technical Journal on Food Chemistry & Chemicals, 1991-10, p. 46-51
Non Patent Literature 2: New Food Industry 1994, Vol. 36, NO. 10, p. 41-48
Non Patent Literature 3: New Food Industry 1994, Vol. 36, NO. 11, p. 29-35

### Summary of Invention

### Technical Problem

Unfortunately, the conventional methods for removing or minimizing the yeasty flavor are insufficiently effective, are uneconomical due to complicated operation, or present hygiene issues. Such problems are responsible for restricting use of yeast extracts or the amounts of yeast extracts used. Also, yeast extracts used as a substitute for animal extracts disadvantageously offer insufficient meat extract-like tastes or flavors as well as insufficient continuity of tastes. Thus, there has also been a demand for the development of a new type of seasoning that offers a meat extract-like taste without containing any animal-derived component and is also excellent in the continuity of tastes.

Under the circumstance, an object of the present invention is to provide a yeast extract that is excellent in the balance and continuity of tastes and can confer a meat extract-like taste without containing animal-derived components while the yeasty flavor of the yeast extract is reduced or masked.

### Solution to Problem

The present inventors have conducted diligent studies to solve the problem. As a result, the present inventors have found that a predetermined amount or more of lactic acid can be added to a yeast extract to thereby obtain a yeast extract that has a reduced yeasty flavor, is excellent in the balance and continuity of tastes, and offers a meat extract-like taste. Such a yeast extract containing lactic acid at high concentration has not been reported so far. The present inventors have also found that the pH of this yeast extract is to be adjusted with a basic substance comprising potassium to thereby obtain a yeast extract more enhanced in terms of the effects described above. The present inventors have further found that when the lactic acid is formed by the sufficient fermentation of a yeast extract with a particular lactic acid bacterium until a predetermined amount or more of lactic acid is obtained, this fermentation can also increase various aroma components, further mask a yeasty flavor specific for the yeast extract, and significantly impart the better balance and continuity of tastes and a meat extract-like taste to the yeast extract. On the basis of these findings, the present invention has been completed.

Specifically, the present invention relates to the following:
(1) A lactic acid-containing yeast extract, suitable for use as a food or drink seasoning, comprising 7.5% (w/w) or more lactic acid based on a solid content of the yeast extract, wherein a pH of the lactic acid-containing yeast extract is adjusted to 4.5 to 7.0 using a pH adjuster, wherein:
   the pH adjuster is a pH adjuster comprising potassium.
(2) The lactic acid-containing yeast extract according to (1) comprising 15% (w/w) or more lactic acid based on the solid content of the yeast extract.
(3) The lactic acid-containing yeast extract according to (1) or (2) further comprising one or more components selected from the group consisting of:
   0.02% or more acetic acid;
   0.1 ppm or more isobutyl alcohol;
   0.1 ppm or more 2-methyl-1-butanol;
   1 ppm or more acetoin;
   1 ppm or more furfuryl alcohol; and
   1 ppm or more methionol.
(4) A lactic acid-containing yeast extract according to any one of [1] to [3], obtained by fermentation of a yeast extract with a lactic acid bacterium.
(5) The lactic acid-containing yeast extract according to (4), wherein the lactic acid bacterium is *Lactobacillus plantarum, Lactobacillus pentosus, Leuconostoc mesenteroides* subsp. *cremoris, Lactobacillus acidophilus* or *Lactobacillus delbrueckii* subsp. *lactis.*
(6) A food or drink with the addition of the lactic acid-containing yeast extract according to any of (1) to (5).
(7) The lactic acid-containing yeast extract according to (1), wherein the pH adjuster comprising potassium is potassium hydroxide.

### Advantageous Effects of Invention

The present invention provides a yeast extract that has a masked or reduced yeast-specific unusual smell (yeasty flavor), is excellent in the balance and continuity of tastes, and offers a meat extract-like taste without containing any animal-derived component, and a method for producing the same. Such a yeast extract is very useful as a new type of natural seasoning that confers a meat extract-like kokumi or thick taste to various foods and drinks.

### Brief Description of Drawings

[Figure 1] Figure 1 shows total ion chromatograms of GC-MS conducted on (i) a yeast extract before lactic fermentation and (ii) a yeast extract after lactic fermentation, obtained in Example 4.
[Figure 2] Figure 2 shows enlarged views of total ion chromatograms of GC-MS conducted on (iii) a yeast extract before lactic fermentation and (iv) a yeast extract after lactic fermentation.

### Description of Embodiments

As the yeast extract for use in the present invention, any yeast extract can be used without particular limitations as long as the yeast extract is produced by extraction from a raw material such as brewery yeast, baker's yeast, or torula yeast according to a method known in the art and is known in the art as edible or medical use or a medium. A commercially available product may be used, or the yeast extract may be produced by a method known in the art with the yeast as a raw material. For example, Vertex (manufactured by Fuji Foods Corp.), Aromild (manufactured by Kohjin Holdings Co., Ltd.), Meast S (manufactured by Asahi Food & Healthcare Co., Ltd.), Koku Base (manufactured by Dai-Nippon Meiji Sugar Co., Ltd.), SK Yeast Extract (manufactured by Chemical Division, Nippon Paper Industries Co., Ltd.), Gistex (manufactured by DSM), or KAV (manufactured by Ohly GmbH) can be used as a commercially available yeast extract. Particularly, a yeast extract produced with baker's yeast as a raw material is preferable because of being available inexpensively and stably. The form of the yeast extract is not particularly limited, and any of liquids, pastes, powders, and the like can be used.

For example, an autolysis method (which involves lysing yeast cells using their endogenous proteolytic enzymes or the like), an enzymatic degradation method (which involves lysing yeast cells by the addition of microbe- or plant-derived enzymes), a hot water extraction method (which involves lysing yeast cells by immersion of the yeast cells for a predetermined time in hot water), an acid or alkali degradation method (which involves lysing yeast cells by the addition of various acids or alkalis), a physical disruption method (which includes sonication, high-pressure homogenization, and a method involving mixing yeast cells with solid matter such as glass beads and disrupting the cells by mixing and grinding), and a freeze-thaw method (which involves disrupting yeast cells by one or more cycles of freezing and thawing) are known as general methods for producing the yeast extract. The yeast extract of the present invention is not limited to those produced by these methods, and a yeast extract produced using any method may be used. The yeast extract produced by the autolysis method may have a problematic unusual smell and as such, is suitable for a target whose yeasty flavor is to be masked or reduced according to the present invention.

A feature of the present invention is that the lactic acid-containing yeast extract comprises 7.5% (w/w) or more lactic acid based on the solid content of the yeast extract, in order to improve the yeasty flavor of the yeast extract and obtain the yeast extract that is excellent in the balance and continuity of tastes and has a meat extract-like taste. In one embodiment, the lactic acid-containing yeast extract preferably comprises 15% (w/w) or more, for example, approximately 20% (w/w) lactic acid, based on the solid content of the yeast extract. If the amount of lactic acid exceeds 40% (w/w) based on the solid content of the yeast extract, the resulting yeast extract typically has the poor balance of tastes due to lactic acid-derived sourness, depending on the concentration level of the yeast extract. Thus, the amount of lactic acid is preferably 40% (w/w) or less based on the solid content of the yeast extract. The lactic acid-containing yeast extract of the present invention comprises, for example, 7.5 to 40% (w/w), preferably 15 to 30% (w/w) lactic acid based on the solid content of the yeast extract.

In the present invention, the content of lactic acid based on the solid content of the yeast extract refers to an amount also including the amount of lactic acid originally contained in the yeast extract. Furthermore, for example, into a powdery yeast extract, a powdering aid such as dextrin or lactose may be mixed. In this case, the solid content of the yeast extract according to the present invention refers to the solid content of the extract except for solid contents derived from components other than the yeast extract, such as the powdering aid. For example, a powdery yeast extract into which 20% (w/w) powdering aid is mixed based on the total weight of the powdery yeast extract and the powdering aid may have a lactic acid content of 10% (w/w) and a water content of 0% (w/w) based on the total weight of the powdery yeast extract. In this case, the content of lactic acid is 12.5% (w/w) based on the solid content of the yeast extract.

Conveniently, the lactic acid-containing yeast extract of the present invention can be obtained by adding lactic acid to the yeast extract. Examples of the lactic acid to be added include lactic acid as well as salts such as potassium lactate, sodium lactate and calcium lactate. Particularly, lactic acid and potassium lactate are preferable. In the case of using the salts, these salts are added in an amount that falls within the range described above in terms of the amount of lactic acid. The solid content of the yeast extract can be determined by an evaporation-to-dryness method. Specifically, the yeast extract is mixed with an appropriate amount of sea sand and heated at approximately 110°C until water evaporates. Then, the percentage by weight of the residual solid matter is measured. More conveniently, Brix values obtained using a differential refractometer may be used instead. In general, the solid content of the yeast extract is 45 to 65% (w/w) in a liquid yeast extract, 70 to 95% (w/w) in a yeast extract paste, and 50 to 99% (w/w) in a yeast extract powder.

The lactic acid-containing yeast extract as described above may further comprise the desired amount of one or more components selected from the group consisting of acetic acid, isobutyl alcohol, 2-methyl-1-butanol, acetoin, furfuryl alcohol and methionol. The resulting yeast extract is preferable because it has a further improved yeasty flavor, is better in the balance of tastes, and has a meat extract-like taste. Conveniently, the desired amount of each of these components can be added to the lactic acid-containing yeast extract to obtain the lactic acid-containing yeast extract that comprises each component.

The content of acetic acid is preferably 0.02% or more and less than 2% based on the solid content of the yeast extract. If the content of acetic acid is 2% or more, the resulting yeast extract typically has the poor balance of tastes due to acetic acid-derived sourness, depending on the concentration level of the yeast extract. Examples of the acetic acid to be added include acetic acid as well as salts such as potassium acetate, sodium acetate and calcium acetate. Particularly, acetic acid and potassium acetate are preferable. Alternatively, an edible raw material containing the acetic acid or the salt thereof may be used. For example, grain vinegar, rice vinegar, or fruit vinegar can be used.

The content of isobutyl alcohol is preferably at least 0.1 ppm or more and less than 100 ppm based on the solid content of the yeast extract. If the content of isobutyl alcohol is 100 ppm or more, the resulting yeast extract typically has the poor balance of tastes due to strong isobutyl alcohol-derived odor, depending on the concentration level of the yeast extract. The isobutyl alcohol to be added may be a commercially available pure product or may be an edible raw material (for example, a flavor or the like) containing isobutyl alcohol.

The content of 2-methyl-1-butanol is preferably at least 0.1 ppm or more and less than 100 ppm based on the solid content of the yeast extract. If the content of 2-methyl-1-butanol is 100 ppm or more, the resulting yeast extract typically has the poor balance of tastes due to strong 2-methyl-1-butanol-derived odor, depending on the concentration level of the yeast extract. The 2-methyl-1-butanol to be added may be a commercially available pure product or may be an edible raw material (for example, a flavor or the like) containing 2-methyl-1-butanol.

The content of acetoin is preferably at least 1 ppm or more and less than 10000 ppm based on the solid content of the yeast extract. If the content of acetoin is 10000 ppm or more, the resulting yeast extract typically has the poor balance of tastes, depending on the concentration level of the yeast extract. The acetoin to be added may be a commercially available pure product or may be an edible raw material (for example, a yogurt, a flavor or the like) containing acetoin.

The content of furfuryl alcohol is preferably at least 1 ppm or more and less than 1000 ppm based on the solid content of the yeast extract. If the content of furfuryl alcohol is 1000 ppm or more, the resulting yeast extract typically has the poor balance of tastes, depending on the concentration level of the yeast extract. The furfuryl alcohol to be added may be a commercially available pure product or may be an edible raw material (for example, a flavor or the like) containing furfuryl alcohol.

The content of methionol is preferably at least 1 ppm or more and less than 1000 ppm based on the solid content of the yeast extract. If the content of methionol is 1000 ppm or more, the resulting yeast extract typically has the poor balance of tastes due to too strong fermentation odor, depending on the concentration level of the yeast extract. The methionol to be added may be a commercially available pure product or may be an edible raw material (for example, a flavor or the like) containing methionol.

The lactic acid-containing yeast extract of the present invention comprises lactic acid and further comprises, if desired, one or more other components as described above. These components, as described above, may be added each individually to the yeast extract. Alternatively, a microbe is cultured with the yeast extract as a medium and thereby allowed to produce the desired amount of each of the components, and this medium after the culture may be used as the yeast extract comprising each component. The content of each of the components based on the solid content of the yeast extract refers to an amount also including the amount of the component originally contained in the yeast extract, as in the case of lactic acid. Furthermore, for example, into a powdery yeast extract, a powdering aid such as dextrin or lactose may be mixed. In this case, the solid content of the yeast extract according to the present invention refers to the solid content of the extract except for solid contents derived from components other than the yeast extract, such as the powdering aid.

For example, the yeast extract is fermented with a lactic acid bacterium, which in turn produces lactic acid. This fermentation is sufficiently performed until the amount of lactic acid is 7.5% (w/w) or more based on the solid content of the yeast extract. In this way, the lactic acid-containing yeast extract of the present invention can be obtained.

For the fermentation of the yeast extract with a lactic acid bacterium, the culture solution used to which the lactic acid bacterium is inoculated is preferably a prefermentation solution comprising a yeast extract and water as main components or a prefermentation solution comprising a yeast extract, a sugar source, and water as main components. Specifically, in one embodiment of the present invention, the lactic acid-containing yeast extract may be obtained inexpensively and conveniently by lactic fermentation using the prefermentation solution thus simply constituted. As a matter of course, the medium may be further supplemented with various components that may be added to a medium for the usual fermentation of a lactic acid bacterium, such as nitrogen sources, carbon sources other than sugars, various inorganic ions, vitamins, and antibiotics. In the case of fermenting the yeast extract with a lactic acid bacterium, a culture solution containing a small amount of salts may be used for favorable growth, depending on the type or the like of the lactic acid bacterium.

Conveniently, the raw material yeast extract is diluted with water or the like so that the prepared prefermentation solution contains approximately 5 to 40% by weight, preferably 20 to 30% by weight of the yeast extract in terms of solid content. In case of adding a sugar source to the prefermentation solution, a sugar source that can be utilized by the lactic acid bacterium is added at a concentration (at the start of culture) of approximately 2 to 6% by weight, preferably approximately 3 to 4% by weight.

The sugar source added to the prefermentation solution is not particularly limited as long as the sugar source can be utilized by the lactic acid bacterium. Examples thereof include glucose, sucrose, fructose, lactose, galactose and maltose. Liquid sugars, fruit juices, vegetables, honey, and the like containing these sugar sources may be used. Among them, glucose or liquid sugars containing glucose are preferable in terms of the fermentability of the lactic acid bacterium. These sugar sources can be added thereto alone or in combinations.

The components for the prefermentation solution are uniformly dissolved, and the resulting prefermentation solution is then sterilized by heating and subsequently cooled. Then, the lactic acid bacterium is inoculated thereto. The sterilization by heating is usually performed at 70 to 130°C, and the cooling is usually performed to 25 to 35°C. Before the sterilization, the pH of the solution may be adjusted to a value suitable for fermentation, preferably 5.0 to 7.0, using a pH adjuster. For example, potassium hydroxide, sodium hydroxide, sodium carbonate, dipotassium hydrogen phosphate, tripotassium phosphate or potassium carbonate can be used as the pH adjuster. As described later, potassium hydroxide is particularly preferable because a yeast extract better in the balance of tastes, etc., is obtained by the addition of the potassium salt.

The lactic acid bacterium for use in fermentation is not particularly limited as long as the lactic acid bacterium is capable of producing lactic acid in the medium containing the yeast extract. For example, a microbe belonging to the genus *Lactobacillus* or *Leuconostoc* is used. Specifically, *Lactobacillus plantarum, Lactobacillus pentosus, Leuconostoc mesenteroides* subsp. *cremoris, Lactobacillus acidophilus, Lactobacillus delbrueckii* subsp. *lactis* or the like is preferable from the viewpoint of the effects of masking and reducing the yeasty flavor of the yeast extract. *Lactobacillus plantarum* is particularly preferable from the viewpoint of the yield of lactic acid or the like by fermentation and the effects of masking and reducing the yeasty flavor. These lactic acid bacteria can be used alone or in any combination.

For example, the fermentation is performed according to a standard method, after inoculation of approximately 0.0001 to 1% by weight of a starter to the prefermentation solution. The starter can be prepared by culturing the lactic acid bacterium for use in fermentation according to a standard method using a medium known in the art. Although the fermentation temperature somewhat differs depending on bacterial species, the solution is cultured at approximately 20 to 40°C, preferably at approximately 25 to 35°C, and particularly preferably around 30°C, from the viewpoint of efficient production of lactic acid. Static fermentation is usually performed. Alternatively, mild stirring may be performed for the purpose of rendering the uniform temperature distribution to the fermentation solution or controlling cell pellets. During the fermentation, the pH of the culture solution decreases along with lactic acid production. Thus, the fermentation solution may be cultured with the pH kept at approximately 5.0 to 7.0 using the pH adjuster. The culture may be any of aerobic culture and anaerobic culture.

The fermentation time can be set appropriately according to the concentration of the yeast extract and other compounding components. The fermentation time is not particularly limited as long as the desired amount of lactic acid is produced. The time is usually 48 to 150 hours, preferably 96 to 144 hours, more preferably 120 to 144 hours. The endpoint of the fermentation can be determined appropriately with the amount of lactic acid formed as an index so that the fermentation solution is suitable for the lactic acid-containing yeast extract to be finally obtained. The amount of lactic acid can be determined according to a standard method, for example, by an enzymatic electrode method using lactic acid oxidase or lactic acid dehydrogenase, or liquid chromatography. In one example, in the case where the solid content of the yeast extract in the medium is approximately 25% (w/w), the fermentation can be terminated at the time when the pH of the medium reaches approximately 3.5 to 4.5 by produced lactic acid. The endpoint of the fermentation may be determined in consideration of the amounts of components other than lactic acid formed by the fermentation with the lactic acid bacterium.

The lactic acid-containing yeast extract thus obtained by the fermentation of the yeast extract with the lactic acid bacterium contains an increased amount of lactic acid as well as increased amounts of one or more components selected from the group consisting of acetic acid, isobutyl alcohol, 2-methyl-1-butanol, acetoin, furfuryl alcohol and methionol as a result of the fermentation, depending on the type of the lactic acid bacterium used. This lactic acid-containing yeast extract may have a further masked or reduced yeasty flavor, be better in the balance and continuity of tastes, be further enhanced in terms of meat extract-like taste, and be preferable as a raw material for various foods or as a natural seasoning. The production of these components can be confirmed according to a standard method, for example by quantification based on gas chromatography.

A bacterium other than the lactic acid bacterium can also be cultured in the yeast extract to obtain a yeast extract containing an increased amount of one or more components selected from the group consisting of acetic acid, isobutyl alcohol, 2-methyl-1-butanol, acetoin, furfuryl alcohol and methionol. Such a bacterium is not particularly limited as long as the bacterium is capable of producing any of the components. A bacterium whose cultures are edible is preferable. A medium and culture conditions can be selected appropriately for culture according to the bacterium used.

The lactic acid-containing yeast extract thus obtained by the addition of lactic acid or by the fermentation of the lactic acid bacterium is pH-adjusted using any pH adjuster that may be used in food production. The resulting yeast extract can have a further improved yeasty flavor, be better in the balance and continuity of tastes, and be enhanced in terms of meat extract-like taste. The pH is adjusted to 4.5 to 7.0, preferably 4.5 to 6.0. Too low a pH intensifies sourness, whereas too high a pH makes bitterness perceived, leading to the reduced quality of the yeast extract.

Also, a potassium salt is added to the lactic acid-containing yeast extract to obtain a yeast extract that is better in the balance and continuity of tastes and is further enhanced in terms of meat extract-like taste. A sodium salt is not sufficient for the continuity of tastes or a meat extract-like taste. A calcium salt or a magnesium salt may cause bitterness or unusual tastes. The potassium salt is not limited as long as the potassium salt can be used in food production. Examples thereof include potassium hydroxide, potassium chloride, potassium carbonate, dipotassium hydrogen phosphate and tripotassium phosphate. These potassium salts can be used alone or in combinations. Particularly, potassium hydroxide is preferable from the viewpoint of improving the balance of tastes or the continuity of tastes and imparting a meat extract-like taste to the yeast extract and also from the viewpoint of versatility. Desirably, the pH of the yeast extract falls within the range described above after the addition of the potassium salt.

The yeast extract described above can be obtained more conveniently using a pH adjuster comprising potassium as the pH adjuster described above.

The lactic acid-containing yeast extract of the present invention may be concentrated, if desired, in order to increase its solid concentration. The concentration method is not particularly limited, and a concentration method known in the art, for example, concentration by heating under normal pressure, concentration by heating under reduced pressure or freeze concentration can be adopted. The lactic acid-containing yeast extract of the present invention may be further dried to obtain an easily handleable powdery yeast extract having a high content of lactic acid. The drying method is not particularly limited, and a dry yeast extract preparation method known in the art, for example, a freeze drying method, a spray drying method or a drum drying method can be adopted.

The pH of the yeast extract thus concentrated or powdered can be determined from a pH measured in a liquid state before the concentration or powdering. Alternatively, the pH of the concentrated or powdered yeast extract may be determined from a pH measured by dissolving it in distilled water so that the solid content of the yeast extract is, for example, approximately 25% (w/w).

The lactic acid-containing yeast extract of the present invention can be used in the same way as in usual yeast extracts and can be mixed into any food or drink either directly or after being processed (e.g., concentrated or dried). The lactic acid-containing yeast extract obtained by the fermentation of a lactic acid bacterium or the like may be used in a state containing the lactic acid bacterium. Alternatively, the lactic acid bacterium may be isolated according to the intended use. The lactic acid-containing yeast extract of the present invention can be used in, for example, processed agricultural foods including processed products of vegetables, fruits, grains and the like, processed marine foods including processed products of seafood, seaweed and the like, or processed livestock products including processed products of eggs, dairy products and the like. Also, the lactic acid-containing yeast extract of the present invention may be added, for use, to seasonings such as Dashi (Japanese-style soup or cooking stock), bouillon, Chinese soups, noodle soups, bastings, soups, sauces and dressings. The lactic acid-containing yeast extract of the present invention mixed into these foods or drinks is also superior in flavoring effect to conventional yeast extracts by masking the yeasty flavor. For example, the lactic acid-containing yeast extract mixed into these foods or drinks can improve the balance and continuity of tastes and can enhance a meat extract-like taste (meat-like taste, Dashi flavor, etc.). The lactic acid-containing yeast extract of the present invention can be further used as a substitute for animal-derived extracts such as beef extracts or chicken extracts. In this case, the lactic acid-containing yeast extract has a taste equivalent thereto, while it can also reduce cost and confer a meat extract-like taste (meat-like taste, Dashi flavor, etc., particularly, meat-like taste) without using any animal-derived component. The optimal concentration for mixing differs depending on the final product and is preferably set in the same way as in usual yeast extracts. Since the lactic acid-containing yeast extract of the present invention is much better in the continuity of tastes and has a stronger meat extract-like taste than conventional yeast extracts, the lactic acid-containing yeast extract mixed in a smaller amount produces effects equivalent to the conventional yeast extracts.

### Examples

Next, the present invention will be described more specifically with reference to Examples. However, the scope of the present invention is not limited to Examples below by any means. Various modifications or changes can be made without departing from the spirit of the present invention.

### [Example 1]

### (Sensory evaluation of taste using yeast extract with the addition of lactic acid)

A yeast extract (manufactured by Ohly GmbH, Yeast Extract KAV, baker's yeast-derived) was dissolved at a concentration of 25% (w/w) in terms of solid content in distilled water. To the solution, 0, 5, 7.5, 10, 15, 20, 30, or 40% lactic acid (manufactured by Wako Pure Chemical Industries, Ltd.) was added based on the solid content of the yeast extract to prepare samples. The solid content of the yeast extract was determined by an evaporation-to-dryness method. Specifically, the yeast extract was mixed with an appropriate amount of sea sand and heated at approximately 110°C until water evaporated. Then, the percentage by weight of the residual solid matter was measured.

The sensory evaluation of each sample was conducted according to a rating method by 5 panelists to evaluate four items: a yeasty flavor, the balance of tastes, the continuity of tastes, and a meat-like taste. The average of each item is shown in Table 1. Also, the overall evaluation of each sample given by the largest number of panelists is shown in Table 1. Each sample was rated relative to the yeast extract with no addition of the lactic acid, according to the following criteria:

### (Each item)

- 1:: Not perceived
- 2:: Only slightly perceived
- 3:: Slightly perceived
- 4:: Perceived
- 5:: Strongly perceived (Overall evaluation)
- ⊚:: Very good
- ○:: Good
- Δ:: Slightly poor
- ×:: Poor

**[Table 1]**

| Evaluation of taste using yeast extract with the addition of lactic acid | | | | | | |
|---|---|---|---|---|---|---|
| | Amount of lactic acid | Improvement in yeasty flavor | Balance of tastes | Continuity of tastes | Meat-like taste | Overall evaluation |
| Sample No. 1 | 0% | 1 | 1 | 1 | 1 | × |
| Sample No. 2 | 5% | 1 | 1 | 1 | 1 | × |
| Sample No. 3 | 7.5% | 1 | 2 | 2 | 2 | Δ |
| Sample No. 4 | 10% | 1 | 3 | 2 | 2 | Δ |
| Sample No. 5 | 15% | 2 | 3 | 3 | 3 | ○ |
| Sample No. 6 | 20% | 2 | 3 | 3 | 3 | ○ |
| Sample No. 7 | 30% | 2 | 3 | 3 | 3 | ○ |
| Sample No. 8 | 40% | 2 | 2 | 2 | 2 | Δ |

As is evident from the results of Table 1, the yeast extract with the addition of 0 or 5% lactic acid had a low rating in each evaluation item and received the comment that bitterness was perceived. Moreover, the yeast extracts with the addition of 7.5 to 40% lactic acid were shown to exhibit the balance and continuity of tastes and had a meat-like taste. Particularly, the yeast extracts with the addition of 15 to 30% lactic acid had a high rating in all the items. In the case where the amount of lactic acid exceeds 40% (not shown in Table 1), there was the comment that strong sourness was perceived and led to the poor balance of tastes.

### [Example 2]

### (Sensory evaluation of taste using lactic acid-containing yeast extract with the addition of various pH adjusters)

The yeast extract (same as in Example 1) was dissolved in water so that its solid content was 25% (w/w). Lactic acid (manufactured by Wako Pure Chemical Industries, Ltd.) was added to the solution to adjust the pH to 4.0(the amount of lactic acid based on the solid content of the yeast extract: 25%). The pH of the solution was further adjusted to 4.5, 5.0, 6.0, 7.0, or 8.0 using potassium hydroxide as a pH adjuster. Apart from this, a sample whose pH was adjusted to 3.5 by the addition of lactic acid was also prepared (the amount of lactic acid based on the solid content of the yeast extract: 44%). Also, samples whose pH was adjusted to 6.0 were also prepared using each of dipotassium hydrogen phosphate, tripotassium phosphate, potassium carbonate, and sodium hydroxide. The amount of potassium hydroxide added for the pH adjustment to 6.0 was 2.2 w/w% based on the total weight of the yeast extract. The amounts of potassium converted from the amounts of potassium hydroxide added for the pH adjustment to 4.5, 5.0, and 6.0 were 0.23 w/w%, 0.91 w/w%, and 1.54 w/w%, respectively, based on the total weight of the yeast extract.

The sensory evaluation of each sample was conducted in the same way as in Example 1 relative to the yeast extract with no addition of the lactic acid. The results are shown in Table 2.

**[Table 2]**

| Evaluation of taste using yeast extract with the addition of lactic acid and then pH-adjusted with various pH adjusters | | | | | | | |
|---|---|---|---|---|---|---|---|
| | pH adjuster | pH | Improvement in yeasty flavor | Balance of tastes | Continuity of tastes | Meat-like taste | Overall evaluation |
| Sample No. 9 | Lactic acid | 3.5 | 2 | 1 | 3 | 1 | × |
| Sample No. 10 | - | 4.0 | 2 | 3 | 3 | 3 | ○ |
| Sample No. 11 | Potassium hydroxide | 4.5 | 2 | 4 | 4.5 | 4.5 | ⊚ |
| Sample No. 12 | Potassium hydroxide | 5.0 | 2 | 5 | 5 | 5 | ⊚ |
| Sample No. 13 | Potassium hydroxide | 6.0 | 2 | 5 | 5 | 5 | ⊚ |
| Sample No. 14 | Potassium hydroxide | 7.0 | 2 | 3 | 4.5 | 4.5 | ○ |
| Sample No. 15 | Potassium hydroxide | 8.0 | 1 | 2 | 3 | 3 | × |
| Sample No. 16 | Dipotassium hydrogen phosphate | 6.0 | 2 | 3 | 4.5 | 4.5 | ○ |
| Sample No. 17 | Tripotassium phosphate | 6.0 | 2 | 3 | 4.5 | 4.5 | ○ |
| Sample No. 18 | Potassium carbonate | 6.0 | 2 | 3 | 4.5 | 4.5 | ○ |
| Sample No. 19 | Sodium hydroxide | 6.0 | 2 | 2 | 2 | 3 | Δ |

As is evident from the results of Table 2, sample Nos. 11, 12, 13 and 14 pH-adjusted to 4.5 to 7.0 using potassium hydroxide as a pH adjuster had a high rating in the items such as the balance of tastes, the continuity of tastes, and meat-like taste. Sample Nos. 11, 12 and 13 pH-adjusted to 4.5 to 6.0 had a particularly high rating. By contrast, sample Nos. 9 and 15 pH-adjusted to 3.5 and 8.0, respectively, did not exhibit significant improvement.

Sample No. 9 pH-adjusted to 3.5 received the comment that the balance of tastes was poor and lactic acid-derived sourness was strongly perceived. The yeast extracts of sample Nos. 10, 11, 12, 13 and 14 pH-adjusted to 4.0 to 7.0 had the favorable balance of tastes and offered a favorably perceivable meat-like taste. Sample No. 15 pH-adjusted to 8.0 received the comment that the balance of tastes was poor and bitterness was perceived.

The yeast extract of sample No. 19 with the addition of the lactic acid and then pH-adjusted with sodium hydroxide was insufficiently improved in terms of the balance or continuity of tastes and had a weak meat-like taste. By contrast, the yeast extracts of sample Nos. 13, 16, 17 and 18 pH-adjusted using potassium salts had an improved yeasty flavor, were excellent in the balance and continuity of tastes, and had a meat-like taste. Particularly, use of potassium hydroxide gave the yeast extract with the highest rating.

### [Example 3]

(Lactic fermentation conditions for yeast extract and sensory evaluation)

The yeast extract (same as in Example 1) was dissolved in water so that its solid content was 25% (w/w). To the solution, 4% (w/w) high-fructose corn syrup (manufactured by Showa Sangyo Co., Ltd.; trade name "NF42 (New Fructo R-O) ") was added to prepare a prefermentation solution. To the prefermentation solution, various lactic acid bacterium species shown in Table 3 were added at a count (at the beginning of fermentation) of 1.0 × 10⁶ cfu/mL, and the resulting solutions were fermented with these various lactic acid bacterium species at varying fermentation temperatures for varying times. The fermentation solutions with a pH of 4.0 to 5.5 were obtained and then pH-adjusted to 6.0 by the addition of potassium hydroxide to prepare samples.

As shown in Table 3, the lactic acid bacteria used were *Lactobacillus plantarum* (FERM P-21349), *Leuconostoc mesenteroides* subsp. *cremoris* (NRIC1538), *Lactobacillus pentosus* (NRIC1069), *Lactobacillus acidophilus* (YO-MIXLYO50), *Lactobacillus delbrueckii* subsp. *lactis* (NRIC1683), *Lactobacillus delbrueckii* subsp. *bulgaricus* (NRIC1041), *Lactobacillus brevis* (NRIC1038), *Lactobacillus casei* (NRIC0644), *Lactobacillus buchneri* (NRIC1040), *Weissella paramesenteroides* (NRIC1542), *Lactobacillus helveticus* (NRIC1545), *Leuconostoc mesenteroides* subsp. *mesenteroides* (NRIC1542), *Lactobacillus sakei* (NRIC1071), and *Leuconostoc mesenteroides* subsp. *dextranicum* (NRIC1539).

As shown in Table 3, the samples fermented with *Lactobacillus plantarum* were prepared with the fermentation temperature of 10, 20, 30 or 40°C. The fermentation time was 24, 48, 96, 120, or 144 hours for preparing the samples fermented with *Lactobacillus plantarum* at 30°C. The amount of lactic acid based on the solid content of the yeast extract in the yeast extract fermentation solution was determined from the total of L-lactic acid and D-lactic acid measured using Biosensor BF-5 (manufactured by Oji Scientific Instruments, enzymatic electrode method) on each sample diluted 100-fold with distilled water after removal of insoluble matter by centrifugation.

The sensory evaluation of each sample was conducted in the same way as in Example 1. Each sample was rated relative to the yeast extract with no addition of the lactic acid according to the following criteria:

### (Each item)

1: Not perceived
2: Only slightly perceived
3: Slightly perceived
4: Perceived
5: Strongly perceived

### (Overall evaluation)

⊚: Very good
○: Good
Δ: Slightly poor
×: Poor

**[Table 3]**

| Evaluation of taste produced by yeast extract fermented under various conditions (lactic acid bacterium species, fermentation temperature, and fermentation time) | | | | | | | | | |
|---|---|---|---|---|---|---|---|---|---|
| | Bacterial species | Temperature | Time | Amount of lactic acid | Improvement in yeasty flavor | Balance of tastes | Continuity of tastes | Meat-like taste | Overall evaluation |
| Sample No. 20 | L. plantarum | 30°C | 24 hr | 13.5% | 2 | 2 | 3 | 2 | Δ |
| Sample No. 21 | L. plantarum | 30°C | 48 hr | 16.2% | 2 | 3 | 4 | 3 | ○ |
| Sample No. 22 | L. plantarum | 30°C | 96 hr | 20.0% | 4 | 5 | 4 | 3 | ⊚ |
| Sample No. 23 | L. plantarum | 30°C | 120 hr | 20.3% | 5 | 5 | 4 | 4 | ⊚ |
| Sample No. 24 | L. plantarum | 30°C | 144 hr | 20.9% | 5 | 5 | 5 | 4 | ⊚ |
| Sample No. 25 | L .plantarum | 10°C | 144 hr | 7.2% | 1 | 1 | 1 | 1 | × |
| Sample No. 26 | L. plantarum | 20°C | 144 hr | 7.2% | 1 | 1 | 1 | 1 | × |
| Sample No. 27 | L. plantarum | 25°C | 144 hr | 18.7% | 4 | 5 | 4 | 4 | ⊚ |
| Sample No. 28 | L. plantarum | 35°C | 144 hr | 19.4% | 5 | 5 | 4 | 5 | ⊚ |
| Sample No. 29 | L. plantarum | 40°C | 144 hr | 7.2% | 2 | 2 | 2 | 2 | Δ |
| Sample No. 30 | L. pentosus | 30°C | 144 hr | 20.2% | 4 | 3 | 4 | 4 | ○ |
| Sample No. 31 | Leu. cremoris | 30°C | 144 hr | 20.1% | 4 | 3 | 4 | 4 | ○ |
| Sample No. 32 | L. acidphilus | 30°C | 144 hr | 18.2% | 4 | 3 | 4 | 4 | ○ |
| Sample No. 33 | L. lactis | 30°C | 144 hr | 18.0% | 4 | 3 | 4 | 4 | ○ |
| Sample No. 34 | L. brevis | 30°C | 144 hr | 16.2% | 3 | 2 | 4 | 3 | Δ |
| Sample No. 35 | L. blugaricus | 30°C | 144 hr | 15.9% | 1 | 3 | 4 | 2 | × |
| Sample No. 36 | L. casei | 30°C | 144 hr | 15.6% | 3 | 3 | 4 | 2 | Δ |
| Sample No. 37 | L. buchneri | 30°C | 144 hr | 14.2% | 3 | 3 | 3 | 3 | Δ |
| Sample No. 38 | Wei. Paramese. | 30°C | 144 hr | 11.4% | 3 | 3 | 3 | 2 | Δ |
| Sample No. 39 | Leu. mesenteroides | 30°C | 144 hr | 10.9% | 3 | 3 | 3 | 2 | Δ |
| Sample No. 40 | L. sakei | 30°C | 144 hr | 9.1% | 2 | 2 | 2 | 1 | × |
| Sample No. 41 | Leu. dextranicum | 30°C | 144 hr | 7.9% | 2 | 2 | 2 | 1 | × |
| Sample No. 42 | L. helveticus | 30°C | 144 hr | 7.9% | 3 | 3 | 3 | 2 | Δ |

As is evident from the results of Table 3, in terms of the fermentation time and the amount of lactic acid, sample Nos. 22, 23 and 24 had an improved yeasty flavor, exhibited the balance and continuity of tastes, and had a meat-like taste, whereas no significant effect was seen in sample No. 20. The fermentation time is preferably 48 hours or longer from the viewpoint of the amount of lactic acid formed by lactic fermentation, and more preferably 96 hours or longer since the obtained yeast extract had a significantly improved yeasty flavor, was excellent in the balance and continuity of tastes, and had a meat-like taste.

The fermentation temperatures of 25°C, 30°C and 35°C (sample Nos. 27, 24 and 28, respectively) produced a sufficient amount of lactic acid and provided a yeast extract that had an improved yeasty flavor, exhibited the balance and continuity of tastes, and had a meat-like taste. Particularly, 30°C (sample No. 24) produced the most favorable results. By contrast, the fermentation temperatures of 10°C, 20°C and 40°C (sample Nos. 25, 26 and 29, respectively) failed to promote fermentation and did not produce favorable results. This indicated that the fermentation temperature was preferably 25 to 35°C, most preferably 30°C, from the viewpoint of the growth of the lactic acid bacterium and the amount of lactic acid formed.

As to the lactic acid bacterium species used in fermentation, the results of sample Nos. 24, 30, 31, 32 and 33 indicated that: *Lactobacillus plantarum, Lactobacillus pentosus, Leuconostoc mesenteroides* subsp. *cremoris, Lactobacillus acidophilus, Lactobacillus delbrueckii* subsp. *lactis,* and the like may be preferably used for reducing the yeasty flavor of the yeast extract and improving its tastes; and among them, *Lactobacillus plantarum* for sample No. 24 was considered particularly preferable from the viewpoint of lactic acid yield by fermentation or improvement in yeasty flavor. Depending on the lactic acid bacterium species used, for example, *Lactobacillus delbrueckii* subsp. *bulgaricus* resulted in the large yield of lactic acid by fermentation, but gave the yeast extract with a low rating. This low rating of the yeast extract was probably influenced by other fermentation products.

Surprisingly, the lactic fermentation of the yeast extract was confirmed to further improve, particularly, its yeasty flavor, compared with the yeast extract with mere addition of the lactic acid as in Example 1 or the yeast extract with the addition of the lactic acid and then pH-adjusted with a potassium salt or the like as in Example 2.

### [Example 4]

### (GC-MS analysis of yeast extract before and after lactic fermentation)

5 ml of the lactic-fermented yeast extract of sample No. 24 obtained in Example 3 was transferred to a test tube with a screw cap, to which 2 g of salt, 2 ml of diethyl ether, and an internal standard solution (n-pentanol: 20 ppm/sample) were then added. After shaking for 10 minutes, the solution was centrifuged at 3000 rpm at 5°C for 10 minutes. The supernatant was placed in a vial and analyzed by gas chromatography-mass spectrometry using 7890C manufactured by Agilent Technologies, Inc.

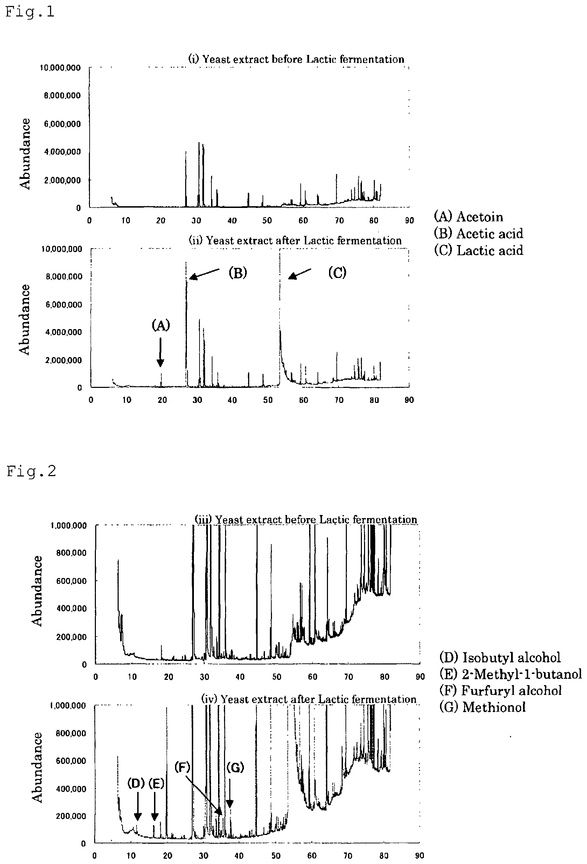

Figure 1 shows total ion chromatograms of the yeast extract before and after lactic fermentation. Figure 2 shows enlarged views thereof. As is evident from the analysis results, lactic acid as well as acetic acid, isobutyl alcohol, 2-methyl-1-butanol, acetoin, furfuryl alcohol, and methionol were significantly increased in the yeast extract after fermentation compared with the yeast extract before lactic fermentation. The content of each aroma component was also determined from its peak area by a calibration curve method using standards. The results are shown in Table 4.

**[Table 4]**

| Content of aroma component increased by lactic fermentation of yeast extract | | |
|---|---|---|
| Component | Before fermentation | After fermentation |
| Acetic acid | 0.01% | 0.04% |
| Isobutyl alcohol | 0 ppm | 1.2 ppm |
| 2-Methyl-1-butanol | 0 ppm | 2.4 ppm |
| Acetoin | 0 ppm | 14.0 ppm |
| Furfuryl alcohol | 0.49 ppm | 1.1 ppm |
| Methionol | 0.49 ppm | 1.6 ppm |

### [Example 5]

### (Taste-improving effect brought about by addition of aroma component increased by lactic fermentation of yeast extract to unfermented yeast extract)

A yeast extract (manufactured by Ohly GmbH, Yeast Extract KAV, baker's yeast-derived) was dissolved at a concentration of 25% (w/w) in terms of solid content in distilled water. To the solution, 20% lactic acid (manufactured by Wako Pure Chemical Industries, Ltd.) was added based on the solid content of the yeast extract to prepare a solution. To the prepared solution, each component that was confirmed in Example 4 to vary between before and after fermentation was added to prepare samples. Sensory evaluation was conducted in the same way as in Example 1 except that the "continuity of tastes" was excluded from results, since obvious change caused by the addition of the aroma components was not observed in this item. Each sample was rated relative to the yeast extract with no addition of the lactic acid according to the criteria shown below. The results are shown in Table 5. In this context, the concentrations shown in Table 5 represent the respective concentrations of the components based on the solid content of the yeast extract.

### (Each item)

1: Not perceived
2: Only slightly perceived
3: Slightly perceived
4: Perceived
5: Strongly perceived

### (Overall evaluation)

⊚: Very good
○: Good
Δ: Slightly poor
×: Poor

**[Table 5]**

| Evaluation of taste using yeast extract with the addition of lactic acid and various aroma components | | | | | |
|---|---|---|---|---|---|
| Acetic acid | | | | | |
| | Concentration (w/w) | Improvement in yeasty flavor | Balance of tastes | Meat-like taste | Overall evaluation |
| Sample No. 43 | 0.01% | 2 | 2 | 2 | × |
| Sample No. 44 | 0.02% | 3 | 3 | 3 | ○ |
| Sample No. 45 | 0.03% | 4 | 4 | 3 | ⊚ |
| Sample No. 46 | 0.2% | 4 | 3 | 3 | ○ |
| Sample No. 47 | 2% | 3 | 1 | 2 | Δ |

| Isobutyl alcohol | | | | | |
|---|---|---|---|---|---|
| | Concentration (w/w) | Improvement in yeasty flavor | Balance of tastes | Meat-like taste | Overall evaluation |
| Sample No. 43 | 0 ppm | 2 | 2 | 2 | × |
| Sample No. 48 | 0.1 ppm | 3 | 3 | 3 | ○ |
| Sample No. 49 | 1 ppm | 3 | 3 | 3 | ○ |
| Sample No. 50 | 10 ppm | 4 | 2 | 3 | ○ |
| Sample No. 51 | 100 ppm | 3 | 2 | 2 | Δ |
| Sample No. 52 | 1000 ppm | 2 | 1 | 2 | × |

| 2-Methyl-1-butanol | | | | | |
|---|---|---|---|---|---|
| | Concentration (w/w) | Improvement in yeasty flavor | Balance of tastes | Meat-like taste | Overall evaluation |
| Sample No. 43 | 0 ppm | 2 | 2 | 2 | × |
| Sample No. 53 | 0.1 ppm | 3 | 4 | 3 | ○ |
| Sample No. 54 | 1 ppm | 4 | 3 | 3 | ○ |
| Sample No. 55 | 10 ppm | 3 | 3 | 3 | ○ |
| Sample No. 56 | 100 ppm | 2 | 1 | 2 | × |
| Sample No. 57 | 1000 ppm | 1 | 1 | 2 | × |

| Acetoin | | | | | |
|---|---|---|---|---|---|
| | Concentration (w/w) | Improvement in yeasty flavor | Balance of tastes | Meat-like taste | Overall evaluation |
| Sample No. 43 | 0 ppm | 2 | 2 | 2 | × |
| Sample No. 58 | 1 ppm | 4 | 3 | 2 | ○ |
| Sample No. 59 | 10 ppm | 5 | 4 | 5 | ⊚ |
| Sample No. 60 | 100 ppm | 5 | 4 | 4 | ⊚ |
| Sample No. 61 | 1000 ppm | 3 | 3 | 4 | ○ |
| Sample No. 62 | 10000 ppm | 1 | 1 | 3 | × |

| Furfuryl alcohol | | | | | |
|---|---|---|---|---|---|
| | Concentration (w/w) | Improvement in yeasty flavor | Balance of tastes | Meat-like taste | Overall evaluation |
| Sample No. 43 | 0.49 ppm | 2 | 2 | 2 | × |
| Sample No. 63 | 1 ppm | 3 | 3 | 3 | ○ |
| Sample No. 64 | 1.5 ppm | 5 | 4 | 5 | ⊚ |
| Sample No. 65 | 10 ppm | 5 | 4 | 3 | ⊚ |
| Sample No. 66 | 100 ppm | 4 | 3 | 3 | ○ |
| Sample No. 67 | 1000 ppm | 3 | 1 | 2 | Δ |

| Methionol | | | | | |
|---|---|---|---|---|---|
| | Concentration (w/w) | Improvement in yeasty flavor | Balance of tastes | Meat-like taste | Overall evaluation |
| Sample No. 43 | 0.49 ppm | 2 | 2 | 2 | × |
| Sample No. 68 | 1 ppm | 4 | 2 | 3 | ○ |
| Sample No. 69 | 1.5 ppm | 5 | 4 | 5 | ⊚ |
| Sample No. 70 | 10 ppm | 4 | 3 | 3 | ○ |
| Sample No. 71 | 100 ppm | 3 | 3 | 3 | ○ |
| Sample No. 72 | 1000 ppm | 3 | 2 | 2 | × |

As is evident from the results of Table 5, the addition of: acetic acid at a concentration of at least 0.02% (w/w); isobutyl alcohol or 2-methyl-1-butanol at a concentration of at least 0.1 ppm; and acetoin, furfuryl alcohol or methionol at a concentration of at least 1 ppm to the yeast extract improved its yeasty flavor and produced a meat-like taste. Particularly, the addition of acetoin, furfuryl alcohol or methionol was shown to be largely effective for improving the yeasty flavor. This indicated that these components increased by lactic fermentation were also effective for improving the yeasty flavor of the yeast extract. When increasing these components by lactic fermentation, it is considered desirable for obtaining the favorable yeast extract to sufficiently perform the fermentation until these components are increased to the desired amounts. When each of these components is added in too large an amount, every component intensified component-derived tastes or smells and failed to produce favorable results.

### [Example 6]

### (Sensory evaluation of taste using consomme soup with the addition of lactic acid-containing yeast extract)

A commercially available dry consomme soup (manufactured by Meiji Seika Kaisha, Ltd.) was dissolved in hot water as usually eaten to prepare a consomme soup. To this consomme soup, the lactic acid-containing yeast extract (sample No. 13) obtained by the addition of lactic acid in Example 2 or the lactic acid-containing yeast extract (sample No. 24) obtained by lactic fermentation in Example 3 was added so that the solid content of the whole lactic acid-containing yeast extract was a concentration (at the time of eating) of 0.3% (w/w) to prepare sample Nos. 74 and 75, respectively. A consomme soup (sample No. 73) was prepared as a control by the addition of the lactic acid-free yeast extract (sample No. 1) so that its solid content was a concentration (at the time of eating) of 0.3% (w/w).

The sensory evaluation of each sample was conducted according to a rating method by 5 panelists to evaluate four items: reduction in yeasty flavor, the balance of tastes, the continuity of tastes, and a meat-like taste. The average of each item is shown in Table 6. Each sample was rated in the same way as in Example 1 according to the criteria shown below. Also, the overall evaluation of each sample given by the largest number of panelists is shown in Table 6, indicated by relative rating to sample No. 73.

### (Each item)

1: Not perceived
2: Only slightly perceived
3: Slightly perceived
4: Perceived
5: Strongly perceived

### (Overall evaluation)

⊚: Very good
○: Good
Δ: Slightly poor
×: Poor

**[Table 6]**

| Evaluation of taste using consomme soup with the addition of various yeast extracts | | | | | | | |
|---|---|---|---|---|---|---|---|
| | Name of additive | Amount of addition | Reduction in yeasty flavor | Balance of tastes | Continuity of tastes | Meat-like taste | Overall evaluation |
| Sample No. 73 | Yeast extract | 0.3% | 1 | 1 | 1 | 1 | - |
| Sample No. 74 | Lactic acid-added yeast extract | 0.3% | 2 | 3 | 3 | 3 | ○ |
| Sample No. 75 | Lactic-fermented yeast extract | 0.3% | 5 | 5 | 5 | 5 | ⊚ |

As is evident from the results of Table 6, sample No. 73 had a low rating in each evaluation item and received the comment that a yeasty flavor or bitterness was strong. By contrast, sample No. 74 had a higher rating in all the evaluation items than sample No. 73 and conferred the balance and continuity of tastes and a meat-like taste to the consomme soup. Sample No. 75 had a higher rating than sample No. 74 and further conferred the balance and continuity of tastes and a meat-like taste to the consomme soup.

### [Example 7]

### (Sensory evaluation of taste using noodle soup with the addition of lactic acid-containing yeast extract)

According to the same procedures as in Example 6, the lactic acid-containing yeast extract obtained by the addition of lactic acid in Example 2 (sample No. 13) or the lactic acid-containing yeast extract obtained by lactic fermentation in Example 3(sample No. 24)was added to a commercially available ready-to-use noodle soup (manufactured by Kikkoman Corp.) so that the solid content of the whole lactic acid-containing yeast extract was a concentration (at the time of eating) of 0.6% (w/w) to prepare sample Nos. 77 and 78, respectively. A noodle soup (sample No. 76) was prepared as a control by the addition of the lactic acid-free yeast extract (sample No. 1) so that its solid content was a concentration (at the time of eating) of 0.6% (w/w).

The sensory evaluation of each sample was conducted according to a rating method by 5 panelists to evaluate four items: reduction in yeasty flavor; the balance of tastes; the continuity of tastes; and a dashi flavor. The average of each item is shown in Table 7. Each sample was rated according to the same criteria as in Example 6. Also, the overall evaluation of each sample given by the largest number of panelists is shown in Table 7, indicated by relative rating to sample No. 76.

**[Table 7]**

| Evaluation of taste using noodle soup with the addition of various yeast extracts | | | | | | | |
|---|---|---|---|---|---|---|---|
| | Name of additive | Amount of addition | Reduction in yeasty flavor | Balance of tastes | Continuity of tastes | Dashi flavor | Overall evaluation |
| Sample No. 76 | Yeast extract | 0.6% | 1 | 1 | 1 | 1 | - |
| Sample No. 77 | Lactic acid-added yeast extract | 0.6% | 2 | 3 | 3 | 3 | ○ |
| Sample No. 78 | Lactic-fermented yeast extract | 0.6% | 5 | 5 | 5 | 5 | ⊚ |

As is evident from the results of Table 7, sample No. 76 had a low rating in each evaluation item and received the comment that a yeasty flavor or bitterness was strong. By contrast, sample No. 77 had a higher rating in all the evaluation items than sample No. 76 and conferred the balance and continuity of tastes and a Dashi flavor to the noodle soup. Sample No. 78 had a higher rating than sample No. 77 and further conferred the balance and continuity of tastes and a Dashi flavor to the noodle soup with the comment that the tastes were as if the amount of bonito Dashi was increased.

### [Example 8]

### (Sensory evaluation of taste using Gyudon (bowl of rice topped with beef) sauce with the addition of a lactic acid-containing yeast extract)

According to the same procedures as in Example 6, the lactic acid-containing yeast extract obtained by the addition of lactic acid in Example 2 (sample No. 13) or the lactic acid-containing yeast extract obtained by lactic fermentation in Example 3(sample No. 24) was added to a commercially available Gyudon sauce (manufactured by Moranbong Co., Ltd.) so that the solid content of the whole lactic acid-containing yeast extract was a concentration (at the time of eating) of 0.6% (w/w) to prepare sample Nos. 80 and 81, respectively. A Gyudon sauce (sample No. 79) was prepared as a control by the addition of the lactic acid-free yeast extract (sample No. 1) so that its solid content was a concentration (at the time of eating) of 0.6% (w/w).

The sensory evaluation of each sample was conducted according to a rating method by 5 panelists to evaluate four items of each sample itself: reduction in yeasty flavor; the balance of tastes; the continuity of tastes; and a meat-like taste. The average of each item is shown in Table 8. Each sample was rated according to the same criteria as in Example 6. Also, the overall evaluation of each sample given by the largest number of panelists is shown in Table 8, indicated by relative rating to sample No. 79.

**[Table 8]**

| Evaluation of taste using Gyudon sauce with the addition of various yeast extracts | | | | | | | |
|---|---|---|---|---|---|---|---|
| | Name of additive | Amount of addition | Reduction in yeasty flavor | Balance of tastes | Continuity of tastes | Meat-like taste | Overall evaluation |
| Sample No. 79 | Yeast extract | 0.6% | 1 | 1 | 1 | 1 | - |
| Sample No. 80 | Lactic acid-added yeast extract | 0.6% | 2 | 3 | 3 | 3 | ○ |
| Sample No. 81 | Lactic-fermented yeast extract | 0.6% | 5 | 5 | 5 | 5 | ⊚ |

As is evident from the results of Table 8, sample No. 79 had a low rating in each evaluation item and received the comment that a yeasty flavor or bitterness was strong. By contrast, sample No. 80 had a higher rating in all the evaluation items than sample No. 79 and conferred the balance and continuity of tastes and a meat-like taste to the Gyudon sauce. Sample No. 81 had a higher rating than sample No. 80 and further conferred the balance and continuity of tastes and a meat-like taste to the Gyudon sauce with the comment that the tastes were as if the kokumi and umami tastes of the beef were enhanced.

The present application claims the priority based on Japanese Patent Application No. 2010-164981 filed on July 22, 2010 and Japanese Patent Application No. 2011-88319 filed on April 12, 2011.

## Claims

1. A lactic acid-containing yeast extract suitable for use as a food or drink seasoning, comprising 7.5% (w/w) or more lactic acid based on a solid content of the yeast extract, wherein a pH of the lactic acid-containing yeast extract is adjusted to 4.5 to 7.0 using a pH adjuster,
wherein
the pH adjuster is a pH adjuster comprising potassium.

2. The lactic acid-containing yeast extract according to claim 1 comprising 15% (w/w) or more lactic acid based on the solid content of the yeast extract.

3. The lactic acid-containing yeast extract according to claim 1 or 2, further comprising one or more components selected from the group consisting of:
0.02% or more acetic acid;
0.1 ppm or more isobutyl alcohol;
0.1 ppm or more 2-methyl-1-butanol;
1 ppm or more acetoin;
1 ppm or more furfuryl alcohol; and
1 ppm or more methionol.

4. A lactic acid-containing yeast extract according to any one of claims 1 to 3, obtained by fermentation of a yeast extract with a lactic acid bacterium.

5. The lactic acid-containing yeast extract according to claim 4, wherein the lactic acid bacterium is *Lactobacillus plantarum, Lactobacillus pentosus, Leuconostoc mesenteroides* subsp. *cremoris, Lactobacillus acidophilus* or *Lactobacillus delbrueckii* subsp. *lactis.*

6. The lactic acid-containing yeast extract according to any one of claims 1 to 5, wherein the pH adjuster comprising potassium is selected from a group consisting of potassium hydroxide, potassium chloride, potassium carbonate, dipotassium hydrogen phosphate and tripotassium phosphate.

7. The lactic acid-containing yeast extract according to claim 6, wherein the pH adjuster comprising potassium is potassium hydroxide.

8. A food or drink with an addition of the lactic acid-containing yeast extract according to any one of claims 1 to 7.

## Patentansprüche

1. Milchsäure enthaltender Hefeextrakt, der zur Verwendung als Speise- oder Getränkewürzmittel geeignet ist und der bezogen auf den Feststoffgehalt des Hefeextrakts 7,5 Gew.-% oder mehr Milchsäure umfasst, wobei der pH-Wert des Milchsäure enthaltenden Hefeextrakts unter Verwendung eines pH-Reglers auf 4,5 bis 7,0 eingestellt ist,
wobei der pH-Regler ein Kalium umfassender pH-Regler ist.

2. Milchsäure enthaltender Hefeextrakt nach Anspruch 1, der bezogen auf den Feststoffgehalt des Hefeextrakts 15 Gew.-% oder mehr Milchsäure umfasst.

3. Milchsäure enthaltender Hefeextrakt nach Anspruch 1 oder 2, der weiters eine oder mehrere Komponenten umfasst, die aus der aus Folgendem bestehenden Gruppe ausgewählt sind:
0,02 % oder mehr Essigsäure;
0,1 ppm oder mehr Isobutylalkohol;
0,1 ppm oder mehr 2-Methyl-1-butanol;
1 ppm oder mehr Acetoin;
1 ppm oder mehr Furfurylalkohol; und
1 ppm oder mehr Methionol.

4. Milchsäure enthaltender Hefeextrakt nach einem der Ansprüche 1 bis 3, der durch Fermentierung eines Hefeextrakts mit einem Milchsäurebakterium erhalten wird.

5. Milchsäure enthaltender Hefeextrakt nach Anspruch 4, wobei das Milchsäurebakterium *Lactobacillus plantarum, Lactobacillus pentosus, Leuconostoc mesenteroides* subsp. *cremoris, Lactobacillus acidophilus* oder *Lactobacilus delbrueckii* subsp. *lactis* ist.

6. Milchsäure enthaltender Hefeextrakt nach einem der Ansprüche 1 bis 5, wobei der Kalium umfassende pH-Regler aus der aus Kaliumhydroxid, Kaliumchlorid, Kaliumcarbonat, Dikaliumhydrogenphosphat und Trikaliumphosphat bestehenden Gruppe ausgewählt ist.

7. Milchsäure enthaltender Hefeextrakt nach Anspruch 6, wobei der Kalium umfassende pH-Regler Kaliumhydroxid ist.

8. Speise oder Getränk mit einem Zusatz eines Milchsäure enthaltenden Hefeextrakts nach einem der Ansprüche 1 bis 7.

## Revendications

1. Extrait de levure contenant de l'acide lactique, utilisable comme assaisonnement d'aliment ou de boisson, comprenant 7,5 % (p/p) ou plus d'acide lactique basé sur la teneur en solides de l'extrait de levure, où le pH de l'extrait de levure contenant de l'acide lactique est ajusté entre 4,5 et 7,0 au moyen d'un agent d'ajustement du pH, l'agent d'ajustement du pH étant un agent d'ajustement du pH comprenant du potassium.

2. Extrait de levure contenant de l'acide lactique selon la revendication 1 comprenant 15 % (p/p) ou plus d'acide lactique basé sur la teneur en solides de l'extrait de levure.

3. Extrait de levure contenant de l'acide lactique selon la revendication 1 ou 2, comprenant en outre un ou plusieurs composants sélectionnés dans le groupe constitué par :
0,02 % ou plus d'acide acétique ;
0,1 ppm ou plus d'alcool isobutylique ;
0,1 ppm ou plus de 2-méthyl-1-butanol ;
1 ppm ou plus d'acétoïne ;
1 ppm ou plus d'alcool furfurylique ; et
1 ppm ou plus de méthionol.

4. Extrait de levure contenant de l'acide lactique selon l'une quelconque des revendications 1 à 3, obtenu par fermentation d'un extrait de levure avec une bactérie lactique.

5. Extrait de levure contenant de l'acide lactique selon la revendication 4, où la bactérie lactique est *Lactobacillus plantarum, Lactobacillus pentosus, Leuconostoc mesenteroides* subsp. *cremoris, Lactobacillus acidophilus* ou *Lactobacillus delbrueckii* subsp. *lactis.*

6. Extrait de levure contenant de l'acide lactique selon l'une quelconque des revendications 1 à 5, où l'agent d'ajustement du pH comprenant du potassium est sélectionné dans un groupe constitué par l'hydroxyde de potassium, le chlorure de potassium, le carbonate de potassium, l'hydrogénophosphate dipotassique et le phosphate tripotassique.

7. Extrait de levure contenant de l'acide lactique selon la revendication 6, où l'agent d'ajustement du pH comprenant du potassium est l'hydroxyde de potassium.

8. Aliment ou boisson additionné de l'extrait de levure contenant de l'acide lactique selon l'une quelconque des revendications 1 à 7.
